# EUROPÄISCHE PATENTSCHRIFT

(11) **EP 0 676 074 B1**
(45) Veröffentlichungstag und Bekanntmachung des Hinweises auf die Patenterteilung: **07.03.2001**
(21) Anmeldenummer: 94904181.8
(22) Anmeldetag: 23.12.1993
(51) Int. Cl.: G06K 19/18

(54) **AUSWEISKARTE MIT VISUELL SICHTBAREM ECHTHEITSMERKMAL UND VERFAHREN ZU IHRER HERSTELLUNG**
IDENTITY CARD WITH A VISIBLE AUTHENTICATING MARK AND A PROCESS FOR MANUFACTURING THE SAME
CARTE D'IDENTITE COMPORTANT UN SIGNE DISTINCTIF VISIBLE A L' IL NU GARANTISSANT L'AUTHENTICITE, ET SON PROCEDE DE FABRICATION

(30) Priorität: 23.12.1992 DE 4243987
(43) Veröffentlichungstag der Anmeldung: 11.10.1995
(60) Teilanmeldung: 00110988.3
(73) Patentinhaber: Giesecke & Devrient GmbH, 81677 München (DE)
(72) Erfinder: BERGMANN, Matthias, D-80999 München (DE); HENKENSCHUH, Horst, D-86663 Asbach-Bäumenheim (DE); KRUSCHE, Reinhard, D-81377 München (DE); LOB, Erwin, D-81375 München (DE)
(74) Vertreter: Klunker . Schmitt-Nilson . Hirsch
(86) Internationale Anmeldenummer: EP9303673
(87) Internationale Veröffentlichungsnummer: WO9415319

(56) Entgegenhaltungen:
- EP-A- 0 264 277
- EP-A- 0 420 261
- EP-A- 0 481 388
- DE-A- 2 324 375
- FR-A- 2 496 938
- FR-A- 2 642 362

## Beschreibung

Die Erfindung betrifft einen mehrschichtigen Datenträger mit allgemeinen Druckbilddaten, mit wenigstens einer opaken Schicht und mit wenigstens einer transparenten Schicht, in welche Zusatzstoffe eingebracht sind, die für einen Laserstrahl absorbierend sind, wobei in die transparente Schicht mittels eines Laserstrahls Informationen in Form von lokalen Änderungen der optischen Eigenschaften der Schicht eingebracht sind.

Datenträger in Form von Ausweiskarten, Kreditkarten, Bankkarten, Barzahlungskarten und dergleichen werden auf den verschiedensten Dienstleistungssektoren, beispielsweise im bargeldlosen Zahlungsverkehr sowie im innerbetrieblichen Bereich in zunehmenden Maß eingesetzt. Infolge ihrer großen Verbreitung stellen sie einerseits typische Massenartikel dar; ihre Herstellung, d. h. die Fertigung des Kartenaufbaus und die Einbringung der kartenindividuellen Benutzerdaten, muß einfach und kostengünstig sein. Andererseits müssen die Karten so ausgebildet sein, daß sie in größtmöglichstem Maß gegen Fälschung und Verfälschung geschützt sind. Die vielen bereits auf dem Markt und sich noch im Entwicklungsstadium befindlichen Arten von Ausweiskarten zeigen das Bemühen der einschlägigen Industrie, die beiden genannten gegenläufigen Bedingungen zu optimieren.

Aus der EP 0 481 388 A2 ist bereits ein mehrschichtiger Datenträger bekannt. In einer im Innern des Datenträgers liegenden Schicht werden Informationen mit Hilfe eines Laserstrahls eingeschrieben, wobei diese Informationen bei Betrachtung mit bloßem Auge visuell nicht erkennbar sind. Hierzu wird eine im Innern des Datenträgers liegende Folie mit Hilfe von Zusatzstoffen für die Laserstrahlung sensibilisiert, wobei die Folie mindestens so dunkel gehalten wird, daß die durch die Laserstrahlung erzeugten Markierungen visuell von außen nicht erkennbar sind.

Aus der FR 2 642 362 ist ein Verfahren zur farbigen Laserbeschriftung von Kunststoffgegenständen bekannt. Dabei wird der Kunststoffgegenstand zunächst mit einem löslichen Kunststoffilm überzogen, wobei der Film wenigstens eine farbgebende Komponente enthält. Durch Bestrahlung mit einem Laserstrahl wird eine Markierung in die Oberfläche des Kunststoffgegenstandes dadurch übertragen, daß der Kunststoffilm sowie die darunterliegende Oberfläche des Gegenstandes durch den Laserstrahl erwärmt werden, wobei die farbgebende Komponente in die Oberfläche des Kunststoffgegenstands eindringt. Die unbestrahlten Stellen des Films werden anschließend mit einem Lösungsmittel aufgelöst bzw. abgewaschen.

Aus der DE-PS 31 51 407 ist weiterhin eine Ausweiskarte bekannt, bei der als Aufzeichnungsmedium in der Karte eine Kunststoffschicht vorgesehen ist, die bei visueller Betrachtung völlig transparent erscheint, das Licht eines Laserstrahls aber so stark absorbiert, daß unter Einwirkung des Laserstrahls in der Folie eine Schwärzung erfolgt. Damit können in die an sich transparente Schichten Bilder oder Daten im letzten Bearbeitungsschritt verfälschungssicher eingebracht werden. Die für die Laserbeschriftung geeignete Folie kann entweder als Abdeckschicht über dem sogenannten Karteninlett, oder aber zusammen mit anderen transparenten Deckfolien Verwendung finden, die auch für den Laserstrahlschreiber tranparent erscheinen.

Obwohl die in der DE-PS 31 51 407 vorgestellte Ausweiskarte bereits ein hohes Maß an Fälschungssicherheit aufweist, ist man weiterhin bestrebt, die Gestaltungsmöglichkeiten der Karte bezüglich des visuellen Eindrucks zu erweitern und Verfälschungen und Totalfälschungen von Karten durch die Einführung zusätzlicher Echtheitsmerkmale, die nur mit hohem technischen Aufwand nachbildbar sind, weiter zu erschweren.

So wird z. B. in der EP-PS 0 219 012 vorgeschlagen, in die Ausweiskarte eine transparente, für die Laserbeschriftung geeignete Schicht einzubringen, und diese Schicht durch eine Deckschicht abzudecken, die sowohl im visuellen Bereich als auch für den Laserstrahlschreiber transparent ist. Diese Schicht ist in einem Teilbereich mit einem Linsenraster versehen. Die für die Laserbeschriftung geeignete Schicht wird durch dieses Linsenraster hindurch mit einem Laser beschriftet. Durch das Linsenraster wird der Laser in der für die Laserbeschriftung geeigneten Schicht fokussiert, so daß in dieser Schicht stäbchenförmige Schwärzungen entstehen, die die gesamte Dicke der Schicht durchdringen. Wird die für die Laserbeschriftung geeignete, transparente Schicht auf diese Weise durch das Linsenraster unter verschiedenen Winkeln mit dem Laserstrahl mit Daten versehen, so entstehen in dieser Schicht Bilder, die im Prinzip auch nur unter diesem Winkel sichtbar sind. Beim Drehen der derart beschrifteten Karte um die jeweilige Kartenachse ist ein sogenannter "Kippeffekt" zu beobachten, da die laserbeschrifteten Daten während der Drehung nur zeitweise sichtbar sind.

Schließlich ist es aus der EP 0 219 011 bekannt, Ausweiskarten mit mehreren transparenten, für die Laserbeschriftung geeigneten Folien zu versehen. Diese Folien werden so gewählt, daß es möglich ist, Daten mittels eines Laserstrahls gleichzeitig in mehrere Schichten oder gezielt nur in eine einzelne Schicht einzubringen, wobei diese Informationen auch durch einen transparenten Zwischenbereich voneinander getrennt vorliegen können. Durch geeignete Wahl der Folien ist es z. B. auch möglich, in eine Folie ein durchgehendes Bild einzubringen, wohingegen in die andere Folie gleichzeitig das gleiche Bild mit Unterbrechung eingebracht wird.

Den obigen Druckschriften ist gemeinsam, daß die Informationen mittels eines Laserstrahls in eine oder mehrere transparente, für die Laserbeschriftung geeignete, d. h. entsprechend sensibilisierte Folien eingeschrieben werden.

Die Dicke der für die Laserbeschriftung geeeigneten Schicht ist durch die Dicke der sensibilisierten Folie vorgegeben. Bei den obenerwähnten Karten mit Kipp- oder Parallaxenbild ist es von Vorteil, wenn die Laserbeschriftung möglichst dünn ausgeführt ist, um eine Überlappung der einzelnen Kipp- oder Parallaxenbilder in bestimmten Betrachtungswinkeln zu vermeiden. Bei der Herstellung von Karten ist die Handhabung der Folie mit einer Dicke von weniger als 50 µm nicht mehr möglich, so daß damit auch die Mindestdicke der Beschriftung vorgegeben ist. Somit lassen sich jedoch Kipp- oder Parallaxenbilder ohne störende Überlappung der einzelnen Teilbilder bei verschiedenen Betrachtungswinkeln nicht herstellen. Darüber hinaus beschränkt die Mindestdicke der Laserbeschriftung die erzielbare Bildschärfe bei allen zu beschriftenden Karten.

Die Sensibilisierung der Folie für die Laserstrahlung erfolgt durch spezielle Zusatzstoffe, die in solcher Konzentration in die an sich transparente Folie eingebracht werden, daß die Transparenz der Folie so wenig wie möglich beeinträchtigt wird, für die Laserenergie aber ausreichend Absorbtionszentren vorhanden sind, an denen die Verfärbung des Folienmaterials bzw. die Materialumwandlung beginnen kann.

Der Erfindung liegt somit die Aufgabe zugrunde, eine mehrschichtige Ausweiskarte mit einer Laserbeschriftung vorzuschlagen, bei der die Beschriftung eine verbesserte Schärfe und Auflösung aufweist.

Die Aufgabe wird durch die im kennzeichnenden Teil des Hauptanspruchs angegebenen Merkmale gelöst.

Der Grundgedanke der Erfindung besteht darin, im Kartenaufbau eines mehrschichtigen Datenträgers eine Schicht vorzusehen, die wenigstens einen Zusatzstoff enthält, wobei diese Schicht im Verhältnis zu den übrigen Schichten des Datenträgers dünn ist. Diese Schicht läßt sich nun an praktisch jeder beliebigen Stelle des Schichtaufbaus einbringen. Die Schicht als solche ist nicht selbsttragend, d. h. sie ist als separate Schicht nicht verarbeitbar, sondern nur gemeinsam mit einer dickeren Trägerschicht, die dann mit weiteren Schichten zu einem mehrschichtigen Datenträger laminiert wird. Aufgrund der geringen Dicke der Schicht ist eine Laserbeschriftung möglich, die, bezogen auf die Kartendicke, auf einen extrem kleinen Volumenbereich begrenzt ist.

Der mit der Erfindung erzielbare Vorteil besteht insbesondere darin, daß durch die Verwendung der erfindungsgemäßen Schicht eine scharf abgegrenzte, klar konturierte Laserbeschriftung des Datenträgers erzielbar ist. So sind beispielsweise bei einer Karte mit Kipp- oder Parallaxenbildern die einzelnen Bilder bei unterschiedlichen Betrachtungswinkeln wesentlich besser voneinander zu unterscheiden, so daß deren optische Wirkung verbessert wird. Die Sensibilisierung von Kunststoffen ist bekannt und beispielsweise in der EP-PS 0 232 502 und der EP-PS 0 190 997 beschrieben.

In einer bevorzugten Ausführungsform ist die dünne, nicht selbsttragende Schicht im Innern der Karte angeordnet, so daß sie vor Umwelteinflüssen oder Einflüssen geschützt ist, die aus dem täglichen Gebrauch des Datenträgers resultieren. Als besonders vorteilhaft hat sich dabei herausgestellt, die dünne, nicht selbsttragende Schicht mit einer transparenten Schicht abzudecken, die an Ihrer Innenseite auch die allgemeinen Druckbilddaten tragen kann.

In einer weiteren besonderen Ausführungsform besteht die erfindungsgemäße Schicht aus einer sensibilisierten Lackschicht, wobei hier weitere Vorteile erzielbar sind. So ist bei der Herstellung der Karte eine wesentlich höhere Flexibilität gegeben, da die Lackschichten von der Folienproduktion getrennt erzeugt und in nahezu beliebigen Stufen der Kartenherstellung in den Kartenaufbau eingebracht werden können. Da die Zusammensetzung der Lackschichten und damit auch deren Lasersensibilisierungseigenschaften kurzfristig veränderbar sind, können Modifikationen der Lackschicht auch lösgelöst von der Lagerhaltung der Folien kurzfristig bei der Kartenherstellung berücksichtigt werden. Neben der herkömmlichen ganzflächigen Aufbringung der Lackschichten sind nun auch Teilbereiche der Karte mit Lackschichten zu sensibilisieren, wobei diese auch in Bild- oder Musterform aufgebracht werden können. Die Grenzen der Möglichkeiten werden lediglich durch die Grenzen der drucktechnischen Möglichkeiten bestimmt. In diesem Sinne sind also auch mehrere Lackschichten übereinander anordenbar oder unterschiedliche Lacke miteinander kombinierbar, wodurch z. B. in unterschiedlichen Kartenbereichen auch unterschiedlich sensibilisierte Flächenbereiche realisierbar sind. Da die Lackschichten nunmehr auch in nahezu beliebiger Schichtdicke aufbringbar sind, werden bei der Laserbeschriftung bei Verwendung sehr dünner Schichten auch nur entsprechend geringere Volumenbereiche der Karten "verfärbt", was sich nicht nur durch erhöhte Beschriftungsschärfe sondern auch durch geringeren Bedarf an Laserenergie und höherer Beschriftungsgeschwindigkeit positiv bemerkbar macht.

Mittels der für die Laserbeschriftung sensibilisierten Lackschichten lassen sich somit alle Anwendungen realisieren, die bisher mit entsprechend sensibilisierten Folien möglich waren. In diesem Sinne lassen sich in gleicher Weise Kippbilder oder Parallaxenbilder erzeugen, wie sie in den eingangs genannten Patentschriften beschrieben sind. Da die Lackschichten im Gegensatz zu den bisher verwendeten Kunststoffolien nahezu beliebig dünn ausgeführt sein können, sind die Daten aber mit wesentlich höherer Auflösung einschreibbar. Dies äußert sich gerade beim Einbringen von Kippbildern oder Parallaxenbildern besonders positiv, da einerseits das "Kippen" der Informationen in wesentlich kleineren Winkelbereichen erfolgt und auch die Tennung der in unterschiedlichen Winkeln eingebrachten Informationen voneinander wesentlich exakter möglich ist.

In einer weiteren Ausführungsform besteht die erfindungsgemäße Schicht aus einer dünnen sensibilisierten Polymerschicht, die zusammen mit mindestens einer weiteren Polymerschicht coextrudiert worden ist. Bei heutzutage verwendeten Extrudern ist es möglich, mehrere, auch unterschiedliche, Polymerschichten gleichzeitig zu extrudieren, wobei die Dicke der einzelnen Schichten separat eingestellt werden kann. Es besteht somit die Möglichkeit, sehr dünne sensibilisierte Folienschichten herzustellen, die wegen der dickeren coextrudierten Trägerschicht handhabbar sind.

Weitere Eigenschaften und Vorteile der Erfindung ergeben sich aus den Unteransprüchen und der nachfolgenden Beschreibung verschiedener Ausführungsbeispiele, die anhand der Figuren näher erläutert sind. Auf eine maßstabsgetreue Wiedergabe wurde hierbei zugunsten der besseren Übersicht verzichtet. Es zeigen:
- Fig. 1: die Aufsicht auf eine Karte mit schematisch angedeuteten "Laserdaten";
- Fig. 2 -13: die Schnittdarstellungen verschiedener mehrschichtiger Karten;

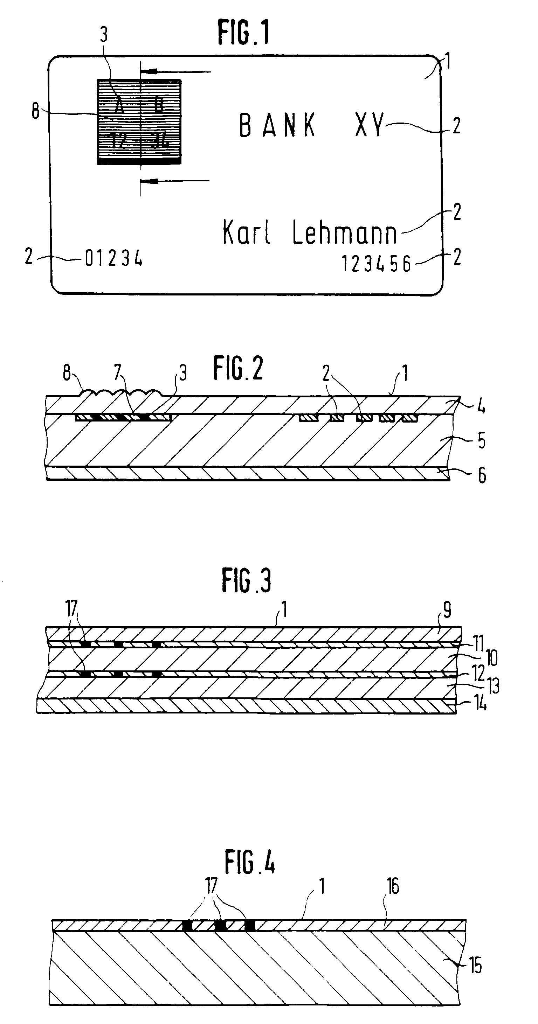

Fig. 1 zeigt eine herkömmliche Karte 1 in Aufsicht, bei der beispielsweise alphanumerische Daten 2 für den Betrachter unter beliebigen Blickwinkeln erkennbar mittels eines Laserstrahls ins Karteninnere eingebrannt sind, sowie benutzerbezogene Daten 3, die im Bereich eines sogenannten Kippbildes vorgesehen sind. Diese Daten 3 sind unter unterschiedlichen Winkeln in das schematisch dargestellte Linsenrasterfeld 8 eingebracht, so daß sie bei der Überprüfung entgegen der zeichnerischen Darstellung nicht gleichzeitig erkennbar sind, sondern jeweils nur unter den Winkeln, unter denen die Beschriftung vorgenommen wurde. Weitere Details hierzu sind der EP-PS 219 012 zu entnehmen, auf die in diesem Zusammenhang ausdrücklich bezug genommen wird.

In Fig. 2 ist ein der Fig. 1 entsprechender Kartenaufbau nochmals im Schnitt dargestellt. Die Karte 1 besteht somit aus der transparenten oberen Deckfolie 4, dem opaken Inlett 5 und der unteren, transparenten Deckfolie 6. Die obere Deckfolie weist ein Linsenraster 8 auf, unter dem eine für die Laserbeschriftung sensibilisierte Lackschicht 7 angeordnet ist. In die Lackschicht 7 sind mittels des Laserstrahls Daten eingeschrieben, die als sogenanntes Kippbild erkennbar sind. Neben dem Kippbilddaten 3 sind die anfangs erwähnten alphanumerischen Daten 2 in die Oberfläche des Inletts 5 eingebrannt.

Die Lackschicht 7 ist relativ dünn ausgeführt. Sinnvoll erscheinen in diesem Zusammenhang Schichtdicken zwischen 1 µm bis etwa 50 µm. Versuche haben ergeben, daß bei Verwendung von Schichtdicken im Bereich von 5 - 20 µm sowohl eine besonders gute Laserbeschriftung mit hohem Auflösungsvermögen und gutem Kontrast möglich als und auch die Trennschärfe der einzelnen Kippbilder hohen Ansprüchen genügt.

Die Einbringung der Lackschicht 7 kann bei der Kartenherstellung entweder durch Aufdrucken auf die Unterseite der Deckfolie 4 oder aber auf der Oberfläche des Inletts 5 erfolgen.

Fig. 3 zeigt einen weiteren Kartenaufbau, bei dem zwei übereinanderliegende, für die Laserbeschriftung geeignete Lackschichten 11, 12 vorgesehen sind, die zusammen mit zwei transparenten Deckfolien 9, 10 Verwendung finden. Dieser Vierschichtaufbau 9, 10, 11, 12 ist auf ein opakes Inlett 13 aufgebracht, auf dessen Rückseite eine weitere transparente Deckfolie 14 vorgesehen ist. In eine Karte mit einem solchen Aufbau können besonders einfach Parallaxenbilder eingebracht werden, wie sie aus der EP-PS 219 011 bereits bekannt sind. Auch bei diesem Kartenaufbau wird der Parallaxeneffekt durch die Verwendung extrem dünner Lackschichten 11, 12 sehr positiv beeinflußt, da die Schärfe der Laseraufzeichnung eine besonders gute Trennung der Strukturen ermöglicht.

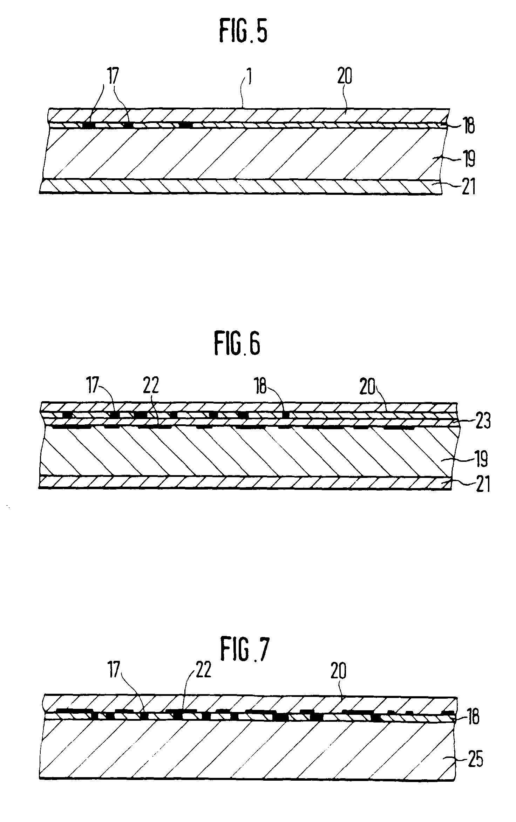

Fig. 4 zeigt eine Karte mit besonders einfachem Aufbau. Bei dieser Karte ist auf einem relativ dicken Kartengrundkörper 15 eine für die Laserbeschriftung sensibilisierte Lackschicht 16 aufgebracht. Die Lackschicht 16 ist in diesem Fall direkt zugänglich und somit besonders widerstandsfähig auszuführen. Als besonders vorteilhaft erweist es sich bei diesem Kartenaufbau, daß die Herstellung durch einfaches Ablackieren des Grundkörpers 15 möglich ist, ohne daß das Kunststoffmaterial des Grundkörpers 15 spezielle Laserbeschriftungseigenschaften aufweisen muß. Die Laserbeschriftung 17 kann bei entsprechender Dimensionierung der Laserenergie ausschließlich in der Lackschicht 16 vorgesehen sein. Durch entsprechende Erhöhung der Laserleistung kann aber auch eine Mitbeschriftung der Oberfläche des Kartengrundkörpers 15 erfolgen.

Fig. 5 zeigt eine Karte, bei der die Lackschicht 18 mit einer transparenten Deckfolie 20 abgedeckt ist. Beide Schichten sind über dem opaken Karteninlett 19 angeordnet. Auf der Rückseite des Karteninletts 19 ist eine weitere transparente Deckfolie 21 vorgesehen. Die in der Lackschicht 18 eingebrachten Laserbeschriftungsdaten 17 sind durch die darüberliegende Deckfolie 20 dem direkten Zugriff entzogen, und somit in erhöhtem Maße vor Fälschungen und Verfälschungen gesichert.

Fig. 6 zeigt eine Karte, bei der die Lackschicht 18 zwischen zwei transparenten Deckschichten 20 und 23 angeordnet ist. Diese insgesamt transparente Verbundfolie ist auf dem Karteninlett 19 angeordnet, das ein Druckbild 22 aufweist. Die Laserbeschriftungsdaten 17 werden bei diesem Kartenaufbau quasi ins Innere der Deckfolie eingebettet und sind vom Druckbild 22 visuell erkennbar getrennt. Die Laserbeschriftungsdaten 17 sind für den Betrachter, insbesondere bei schräger Betrachtung der Karte als über den Druckbilddaten 22 "schwebend" erkennbar. Dieser Effekt tritt umso deutlicher zutage, je dicker die transparente Schicht 23 ausgebildet ist. Im Extremfall kann sogar auf die opake Schicht 21 verzichtet werden, so daß weitgehend die gesamte Kartendicke durch die transparente Schicht 23 gebildet ist. Das Druckbild 22 befindet sich bei diesem Kartenaufbau dann nahezu auf der gegenüberliegenden Oberfläche der Karte.

Fig. 7 zeigt eine Ausweiskarte, bei der das Druckbild 22 auf der Rückseite der transparenten Deckfolie 20 angeordnet ist. Diese derart bedruckte Folie wird auf den opaken Grundkörper 25, der mit einer Lackschicht 18 versehen ist, auflaminiert. Schreibt man in diesen Kartenaufbau mit Hilfe des Laserstrahlschreibers Daten 17 in die Lackschicht 18 ein, so sind diese Daten im Kartenaufbau unter dem Druckbild 22 angeordnet. Versuche, diese Daten 17 zu entfernen führen somit stets auch zur Zerstörung des Druckbilds, das bei entspechend komplizierter Ausführung (Guillochen etc.) Manipulationen praktisch unmöglich macht. Da beim Einschreiben der Laserdaten Teile des Druckbildes 22 vom Laserstrahl getroffen werden, erfolgt in diesen Fällen neben dem Einschreiben die Lackschicht 18 an diesen Stellen auch eine lokale Zerstörung des Druckbildes selbst bei intakter Karte ist dies dem Betrachter nicht erkennbar, da die Laserbeschriftung einen in sich homogenen Eindruck vermittelt. Im Schichtaufbau selbst sind die Laserbeschriftungsdaten aber auf diese Weise sowohl im Druckbild 22 als auch in der Lackschicht 18 eingebrannt. Durch entsprechende Erhöhung der Laserenergie kann dieser Effekt auch noch, wie bereits erwähnt, in den Kartengrundkörper 25 ausgedehnt werden.

Die genannten Ausführungsbeispiele zeigen, daß die Lackschichten in unterschiedlichster Form im Kartenaufbau zu berücksichtigen sind, und daß je nach spezifischer Ausführungsform unterschiedliche Effekte erzielbar sind. Die Zahl der Kombinationsmöglichkeiten ist selbstverständlich durch die genannten Ausführungsbeispiele nicht erschöpft, insbesondere kann durch gezieltes Übereinanderanordnen von Lackschichten gleichen oder unterschiedlichen Sensibilisierungsgrades eine lokale Erhöhung der Lasersensibilisierung erfolgen. Die Lackschicht kann sowohl ganzflächig als auch in Musterform aufgebracht werden, wodurch zusätzliche Effekte im Kartenaufbau und bei der Kartenbeschriftung zu erreichen sind.

Bei der Zusammensetzung der sensibilisierten Lackschicht lassen sich eine Vielzahl von Parametern variieren, so daß für das jeweils verwendete Kartenmaterial eine optimal beschriftbare Lackschicht zusammengesetzt werden kann. Im einzelnen lassen sich folgende Parameter variieren:
1. Das Lösungsmittel (Tetrahydrofuran, Cyklohexanon, Ethymethylketon etc.),
2. das Bindemittel (PVC, PC, Polyester etc.),
3. die Sensibilisierungssubstanz,
4. die Schichtdicke des Lacks (10 - 150 um Naßfilm),
5. verschiedene Kombinationsmöglichkeiten von Lacktyp und Folienmaterial (z. B. Polyester und PVC),
6. die Aufbringungsart (Rakeln, Drucken, Sprühen, Gießen etc.),
7. die Lage der Lackschicht in/auf der Karte,
8. die Verwendung eines Dispersionslacks.

Aus der Vielzahl der Kombinationsmöglichkeiten sei anhand eines Beispieles eine mögliche Ausführungsform dargestellt:

### Lackherstellung

In 340 g Cyclohexanon werden 0,08 g Ruß in einem Ultraschallbad im Laufe von 5 Minuten dispersigert. Zu dieser Dispersion werden 60 g PVC mit einem K-Wert von mehr als 50 zugegeben und in der Hitze gelöst.

### Applikation

Der nach dem obigen allgemeinen Verfahren hergestellte Lack, der den Zusatzstoff Ruß (200 ppm) enthält, wird nun mittels eines Rakels in einer Naßfilmstärke von 75 µm auf eine PVC-Folie aufgetragen und getrocknet. Diese lackierte Folie wird nun mit weiteren, für den Laserstrahl transparenten Folien nach den herkömmlichen Verfahren zu einer Karte laminiert, so daß die Lackschicht unter einer transparenten Folie im Innern der Karte zu liegen kommt.

### Einbringung des Lasereindrucks

Die nach dem obigen allgemeinen Verfahren hergestellte und einen sensibilisierten Lack enthaltenden Karte wird nun im Strahlengang eines Nd-YAG-Pulslasers durch Lichtpulse bestrahlt. Es entsteht eine intensiv schwarze Färbung. Die Beschriftung findet dabei in der Lackschicht statt.

Für die Auswahl der Bindemittel in den Lacken hat sich insbesondere herausgestellt, daß es nicht erforderlich ist, als Bindemittel solche polymere Stoffe zu verwenden, die dem Basispolymer der angrenzenden Schicht zumindest chemisch ähnlich ist, auch wenn dies vorteilhaft sein kann. Es ist darüber hinaus günstig, entgegen der allgemein üblichen Praxis Polymere mit einem relativ hohen Molekulargewicht zu verwenden. Hierdurch wird einerseits die erzielbare Schwärzung bei gleicher Laserenergie verbessert und andererseits die Haftung zwischen der sensibilisierten Lackschicht und einer angrenzenden Folienschicht erhöht. Beim Ansatz des Lacks hat es sich für die Beschriftbarkeit und den Verbund der Schichten als günstig erwiesen, das Molekulargewicht des polymeren Bindemittels so zu wählen, daß in der gesättigten Lösung ein Feststoffgehalt von 20 % nicht überschritten wird. Für PVC können hierzu Materialien mit einem K-Wert von mehr als 50, für Polycarbonat (PC) Polymere mit einem Molekulargewicht von mehr als 10.000 g/mol verwendet werden. Die Lackschichten weisen dann eine besonders gute Beschriftbarkeit auf, wenn ihr Bindemittel aus Homopolymeren mit einem möglichst geringen Weichmacheranteil bestehen. Copolymere sind jedoch auch geeignet, sofern das Comonomer keine Weichmachereigenschaft besitzt, also z. B. auf der Basis von Acrylaten besteht.

Neben diesen Lacken mit polymeren Bindemitteln hohen Molekulargewichts ist es jedoch auch möglich, sensibilisierte Dispersionslacke zu verwenden, die üblicherweise aus einem Festkörper, einem Nichtlöser, einem Dispergierhilfsmittel und bei Bedarf auch einem Lösungsmittel bestehen.

Als ebenfalls verwendbar erweisen sich sensibilisierte sogenannte Pulverlakke, welche feinkörnige Bindesysteme ohne Lösungsmittel sind. Pulverlacke werden beispielsweise dadurch auf die Schicht einer Ausweiskarte aufgetragen, daß sie elektrostatisch aufgeladen und auf das zu lackierende Substrat aufgesprüht werden. Die hohe Teilchengeschwindigkeit der Lackpartikel führt dabei dazu, daß das polymere Pulver auf der Folie haftet und sich während des Kaschierprozesses zu einer kontinuierlichen Lackschicht verbindet.

Da die Haftung der an die Lackschicht grenzenden Folienschicht der Karte durch das lokale Carbonisieren der Lackschicht in den belaserten Bereichen herabgesetzt ist, ist es für die Verbesserung der Haftung des Schichtverbundes günstig, eine Lackschicht zu verwenden, die aus einer Mischung eines ersten Lackes mit einem zweiten Lack besteht, wobei der zweite Lack mit dem Laserstrahl nicht in Wechselwirkung tritt. Bei diesen Lackgemischen sind die beiden Lacke vorzugsweise chemisch unterschiedlich, etwa Acrylat- und PVC-Lack, wobei lediglich einem der Lacke Zusatzstoffe beigemischt sind. Durch diese Maßnahme bleibt die Haftung zwischen der Lackschicht und der angrenzenden Folienschicht der Karte erhalten, da mindestens eine Lackkomponente für den Laserstrahl transparent ist, keine Materialumwandlung eingeht und somit einen festen Verbund zwischen Lackschicht und der angrenzenden Folienschicht garantiert.

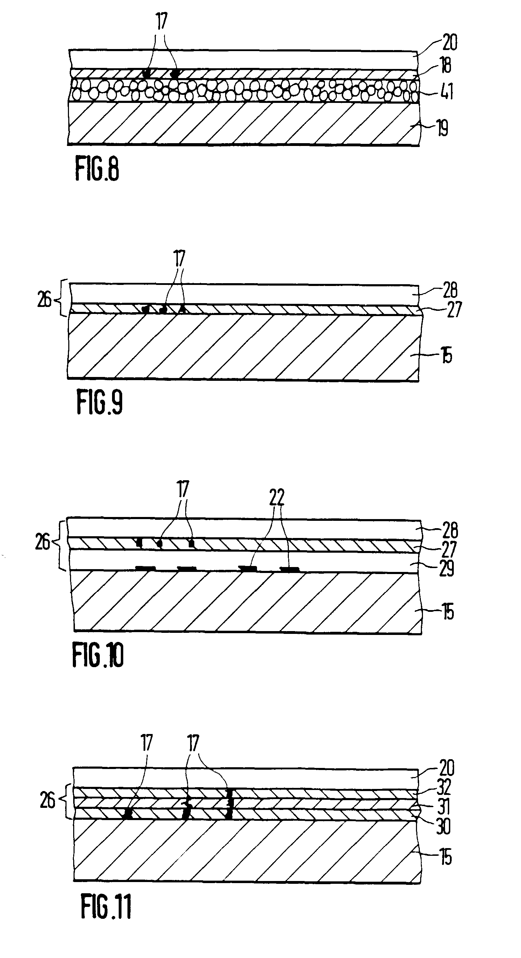

Eine weitere Ausführungsform der Erfindung wird in Fig. 8 dargestellt. Hierbei liegt auf einer opaken Kernschicht 19 eine poröse Schicht 41, auf welche die Lackschicht 18 aufgebracht ist. Die Lackschicht kann zusätzlich mit einer transparenten Deckschicht abgedeckt sein. Der besondere Vorteil der Anordnung liegt darin, daß die poröse Schicht 41 die bei der Laserbeschriftung entstehenden Gase aufnehmen kann, so daß die bei der Laserbeschriftung entstehende Gasbildung durch den porösen Untergrund abgefangen wird und somit keine Aufplatzer entstehen.

In einer weiteren bevorzugten Ausführungsform wird die sensibilisierte Schicht im Verbund mit mindestens einer weiteren Folienschicht als sogenannte coextrudierte Folie hergestellt. Hierbei wird durch das gemeinsame gleichzeitige Extrudieren mehrerer Folienmaterialien ein Folienverbund hergestellt, bei dem mindestens eine Schicht der coextrudierten Folie mit Zusatzstoffen versehen ist, welche eine Laserbeschriftung ermöglicht. Die dünne sensibilisierte Schicht kann somit gemeinsam mit wenigstens einer coextrudierten Schicht wie eine übliche Folie verarbeitet werden. Typischerweise hat die mit Zusatzstoffen versehene Schicht eine Dicke von 5 - 50 µm.

In Fig. 9 ist eine Ausweiskarte dargestellt, die aus einem Kartengrundkörper 15, der Druckdaten enthalten kann, und einer darüberliegenden coextrudierten Folie 26 besteht. Die coextrudierte Folie wiederum besteht aus zwei Kunststoffschichten, von denen die Schicht 27 für die Laserbeschriftung sensibilisiert ist. Da sich die lasersensibilisierten Schichten innerhalb einer coextrudierten Folie in nahezu beliebigen Bereichen variieren lassen, ist es auch möglich, die für eine klare Beschriftung erforderliche Schichtdicke von weniger als 50 µm herzustellen.

Bei entsprechender Wahl der coextrudierten Materialien kann die coextrudierte Folie auch umgekehrt auf den Kartenkörper auflaminiert werden, so daß die dünne, nicht selbsttragende Schicht 27 außen liegt. In diesem Fall ist es möglich, die Schicht 27 zu bedrucken. Die Schicht 27 wird dann üblicherweise durch eine weitere transparente Schicht gegen Umwelteinflüsse geschützt. Die Laserdaten können vor oder nach dem Aufbringen der zusätzlichen transparenten Schicht eingeschrieben werden, wobei auch durch das Druckbild hindurch gelasert werden kann, wenn die Druckfarbe für den Laserstrahl transparent ist.

Fig. 10 zeigt einen weiteren Kartenaufbau, bei dem ein Kartengrundkörper 15 mit Druckdaten 22 bedruckt ist. Die coextrudierte Folie ist auf den Kartengrundkörper aufkaschiert und besteht aus drei Schichten 27, 28 und 29, von denen lediglich die Schicht 27 mit Zusatzstoffen versehen ist. Die Laserbeschriftung 17 erfolgt demgemäß lediglich in der Schicht 27. Dieser Aufbau hat den Vorteil, daß zwischen dem Druck 22 und die lasersensibilisierte Schicht 27 eine Trennschicht 29 eingefügt ist, die verhindert, daß der Verbund zwischen dem Kartengrundkörper und der darüberliegenden Schicht 26 durch die Laserbeschriftung zusätzlich verschlechtert wird.

In Fig. 11 ist ein Ausführungsbeispiel gezeigt, bei dem die coextrudierte Folie 26 aus drei Schichten 30, 31 und 32 besteht, wobei die Schicht 30 am meisten und die Schicht 32 am wenigsten für die Laserbestrahlung sensibilisiert wurde. Wegen der unterschiedlich starken Sensibilisierung ist es möglich, mit dem Laserstrahl eine, zwei oder alle drei Schichten zu beschriften, was zu einer unterschiedlichen Schwärzungstiefe führt. Die Zahl der beschrifteten Schichten hängt lediglich von der benutzten Intensität des Laserstrahls ab. Besonders vorteilhaft ist diese Ausführungsform, wenn unterschiedliche Graustufen erzeugt werden sollen, also etwa beim Einbringen von Halbtonbildern in eine Karte. Auf dem Karteninlett kann sich darüber hinaus ein Aufdruck befinden (nicht gezeigt), wobei es sich in diesem Fall als günstig erwiesen hat, wenn die zu beschriftende Schicht 26 vom Karteninlett und dem darauf liegenden Aufdruck durch eine nichtlasersensible Schicht getrennt ist, die Teil der coextrudierten Folie oder eine eigenständige Schicht ist. Darüber hinaus ist es auch möglich, die coextrudierte Folie 26 mit einer zusätzlichen Schicht 20 abzudecken oder die Schicht 20 gleichzeitig mit den Schichten 30 - 32 zu coextrudieren.

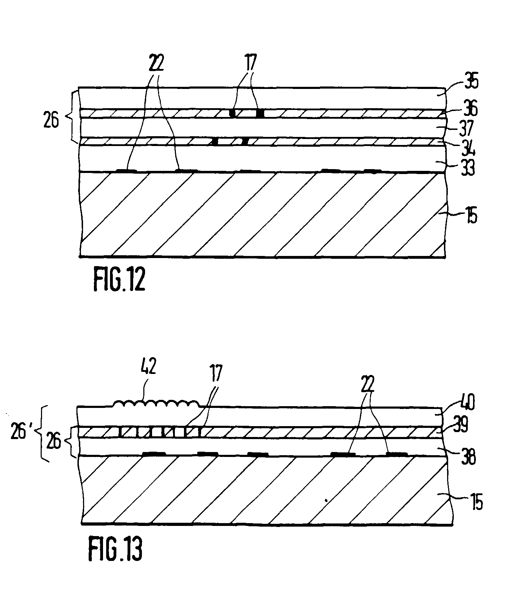

In Fig. 12 ist auf ein Karteninlett 15 ein Aufdruck 22 aufgebracht, der mit einer Abdeckschicht 33 belegt ist. Darüber wurde eine coextrudierte Folie aufgebracht, die zwei dünne lasersensibilisierte Schichten 34 und 36 enthält. Ebenfalls Teil der coextrudierten Folie sind die Schichten 35 und 37, die aus gleichem oder unterschiedlichem Material bestehen. Für die lasersensibilisierten Schichten, die im allgemeinen eine Dicke von 5 und 50 um aufweisen, kann jeweils der gleiche oder ein unterschiedlicher Sensibilisierungsgrad gewählt werden. Es ist darüber hinaus auch möglich, bereits die Abdeckschicht 33 mit in den Coextrusionsfolienverbund aufzunehmen, so daß es genügt, die Karte durch einfaches Aufkaschieren der aus den Schichten 33 bis 37 bestehenden coextrudierten Folie auf das bedruckte Karteninlett 15 fertigzustellen.

In Fig. 13 ist ein Karteninlett 15 zu sehen, das mit Aufdrucken 22 versehen sein kann. Über diesen Kartengrundkörper wird eine coextrudierte Folie auflaminiert, die aus den Schichten 38 und 39 besteht. Dabei ist die Schicht 39 als lasersensibilisierte Schicht ausgeführt, die von einer darüberliegenden Schicht 40 abgedeckt ist, welche mit einem Linsenrastermuster 41 versehen ist. Die coextrudierte Folie kann auch als Folienverbund 26' hergestellt werden, so daß er die Schichten 38, 39 und 40 enthält, wobei die Schicht 40 vor oder während des Auflaminierens auf einen Kartenkörper einer Behandlung unterworfen wird, bei der das Linsenrastermuster 41 entsteht.

Die zuletzt genannten Ausführungsbeispiele zeigen, daß die Verwendung einer coextrudierten Folie, die eine sensibilisierte, jeweils dünne und nicht selbsttragende Schicht enthält, in einem Datenträger in den unterschiedlichsten Formen möglich ist, wobei je nach spezifischer Ausführungsform unterschiedliche Effekte erzielbar sind.

## Patentansprüche

1. Mehrschichtiger Datenträger (1) mit allgemeinen Druckbilddaten (2, 22), mit wenigstens einer opaken Schicht (5, 13, 15, 19, 25) und mit wenigstens einer transparenten Schicht (7, 11, 12, 16, 18, 27, 39), die dadurch sensibilisiert ist, daß sie Zusatzstoffe enthält, die für einen Laserstrahl absorbierend sind, wobei in die transparente Schicht mittels eines Laserstrahls Informationen in Form von lokalen Änderungen der optischen Eigenschaften der Schicht durch Verfärbung der Schicht einbringbar sind, wobei die mit einem Laserstrahl beschreibbare Schicht eine im Vergleich zu den übrigen Schichten des Datenträgers dünne, nicht selbsttragende Schicht mit einer Dicke von 1 bis 50 µm ist.

2. Datenträger nach Anspruch 1, dadurch **gekennzeichnet,** daß die nicht selbsttragende Schicht (7, 18, 27, 39) im Innern des Datenträgers liegt.

3. Datenträger nach Anspruch 2, dadurch **gekennzeichnet,** daß die nicht selbsttragende Schicht durch eine transparente Schicht (4, 9, 10, 20, 28, 40) abgedeckt ist.

4. Datenträger nach Anspruch 3, dadurch **gekennzeichnet,** daß die transparente Schicht auf der der nicht selbsttragenden Schicht zugewandten Seite bedruckt ist.

5. Datenträger nach wenigstens einem der Ansprüche 1 bis 3, dadurch **gekennzeichnet,** daß die Druckbilddaten (2, 22) auf der opaken Schicht (5, 15, 19) aufgebracht sind.

6. Datenträger nach einem der Ansprüche 1 bis 5, dadurch **gekennzeichnet,** daß die nicht selbsttragende Schicht eine Lackschicht (7, 11, 12, 16, 18) ist.

7. Datenträger nach Anspruch 6, dadurch **gekennzeichnet,** daß das Bindemittel der Lackschicht ein polymerer Stoff mit einem Molekulargewicht von mehr als 10.000 g/mol ist.

8. Datenträger nach Anspruch 6, dadurch **gekennzeichnet,** daß das Bindemittel der Lackschicht aus einem homopolymeren Material besteht.

9. Datenträger nach Anspruch 6, dadurch **gekennzeichnet,** daß das Bindemittel der Lackschicht aus einem Copolymeren besteht, wobei das Comonomer keine Weichmachereffekte im Material hervorruft.

10. Datenträger nach wenigstens einem der Ansprüche 6 bis 9, dadurch **gekennzeichnet,** daß die Lackschicht (7, 16, 18) nur in Teilbereichen aufgetragen wird.

11. Datenträger nach Anspruch 6, dadurch **gekennzeichnet,** daß der Schichtaufbau des Datenträgers mehrere übereinanderliegende Lackschichten aufweist, von denen jede einzelne Lackschicht (30, 31, 32, 34, 36) entweder unterschiedliche Zusatzstoffe oder eine unterschiedliche Menge an Zusatzstoffen enthält.

12. Datenträger nach Anspruch 11, dadurch **gekennzeichnet,** daß die übereinanderliegenden Lackschichten (11, 12, 34, 36) durch jeweils wenigstens eine transparente Schicht (10, 37) getrennt sind.

13. Datenträger nach wenigstens einem der Ansprüche 6 bis 12, dadurch **gekennzeichnet,** daß die Lackschicht aus einem Lack gebildet ist, der mit Ausnahme der Zusatzstoffe die gleiche chemische Zusammensetzung aufweist, wie die Basispolymere der jeweils angrenzenden Schichten.

14. Datenträger nach wenigstens einem der Ansprüche 6 bis 13, dadurch **gekennzeichnet,** daß die Lackschicht ein Dispersionslack ist.

15. Datenträger nach wenigstens einem der Ansprüche 6 bis 13, dadurch **gekennzeichnet,** daß die Lackschicht ein Pulverlack ist.

16. Datenträger nach wenigstens einem der Ansprüche 6 bis 12, dadurch **gekennzeichnet,** daß die Lackschicht aus einem Gemisch zweier unterschiedlicher Lacke besteht.

17. Datenträger nach Anspruch 16, dadurch **gekennzeichnet,** daß einer der beiden Lacke mit Ausnahme der Zusatzstoffe die gleiche chemische Zusammensetzung aufweist wie das Basispolymer der jeweils angrenzenden Schichten.

18. Datenträger nach Anspruch 6, dadurch **gekennzeichnet,** daß das Bindemittel PVC mit einem K-Wert von größer 50 ist.

19. Datenträger nach Anspruch 6, dadurch **gekennzeichnet,** daß die Lackschicht (18) über einer porösen Schicht (41) liegt.

20. Datenträger nach einem der Ansprüche 1 bis 5, dadurch **gekennzeichnet,** daß die dünne, nicht selbsttragende Schicht Teil einer coextrudierten Folie (26, 26') ist.

21. Datenträger nach Anspruch 20, dadurch **gekennzeichnet,** daß die nicht selbsttragende Schicht (7, 18) unmittelbar an die Schicht mit den allgemeinen Druckbilddaten (2, 22) grenzt.

22. Datenträger nach Anspruch 20, dadurch **gekennzeichnet,** daß die coextrudierte Folie (26) aus der nicht selbsttragenden Schicht (27) und zwei weiteren transparenten Schichten (28, 29) besteht, wobei die nicht selbsttragende Schicht zwischen diesen transparenten Schichten liegt.

23. Datenträger nach einem der Ansprüche 20 bis 22, dadurch **gekennzeichnet,** daß die nicht selbsttragende Schicht aus mehreren einzelnen, mit unterschiedlichen oder einer unterschiedlichen Menge an Zusatzstoffen versehenen Schichten (30, 31, 32) besteht.

24. Datenträger nach Anspruch 23, dadurch **gekennzeichnet,** daß die einzelnen nicht selbsttragenden Schichten (34, 36) jeweils durch transparente Schichten (37) getrennt sind.

25. Datenträger nach wenigstens einem der Ansprüche 20 bis 24, dadurch **gekennzeichnet,** daß die Druckbilddaten auf der Oberfläche der dünnen, nicht selbsttragenden Schicht aufgebracht sind.

26. Datenträger nach Anspruch 25, dadurch **gekennzeichnet,** daß die Druckbilddaten für den Laserstrahl transparent sind.

## Claims

1. A multilayer data carrier (1) bearing general printed data (2, 22), having at least one opaque layer (5, 13, 15, 19, 25) and at least one transparent layer (7, 11, 12, 16, 18, 27, 39) which is sensitized by containing additives absorbent for a laser beam, whereby information can be incorporated in the transparent layer by means of a laser beam in the form of local changes in the optical properties of the layer by discoloration of the layer, whereby the layer inscribable with a laser beam is a nonself-supporting layer which is thin in comparison to the other layers of the data carrier and has a thickness of 1 to 50 microns.

2. A data carrier according to claim 1, characterized in that the nonself-supporting layer (7, 18, 27, 39) is located in the interior of the data carrier.

3. A data carrier according to claim 2, characterized in that the nonself-supporting layer is covered by a transparent layer (4, 9, 10, 20, 28, 40).

4. A data carrier according to claim 3, characterized in that the transparent layer is printed on the side facing the nonself-supporting layer.

5. A data carrier according to at least one of claims 1 to 3, characterized in that the printed data (2, 22) are applied to the opaque layer (5, 15, 19).

6. A data carrier according to any of claims 1 to 5, characterized in that the nonself-supporting layer is a layer of lacquer (7, 11, 12, 16, 18).

7. A data carrier according to claim 6, characterized in that the vehicle of the layer of lacquer is a polymeric substance with a molecular weight of more than 10,000 g/mol.

8. A data carrier according to claim 6, characterized in that the vehicle of the layer of lacquer consists of a homopolymeric material.

9. A data carrier according to claim 6, characterized in that the vehicle of the layer of lacquer consists of a copolymer, whereby the comonomer causes no plasticizer effects in the material.

10. A data carrier according to at least one of claims 6 to 9, characterized in that the layer of lacquer (7, 16, 18) is applied only in partial areas.

11. A data carrier according to claim 6, characterized in that the layer structure of the data carrier has several superjacent layers of lacquer, each individual layer of lacquer (30, 31, 32, 34, 36) containing either different additives or different amounts of additive.

12. A data carrier according to claim 11, characterized in that the superjacent layers of lacquer (11, 12, 34, 36) are separated by at least one transparent layer (10, 37) in each case.

13. A data carrier according to at least one of claims 6 to 12, characterized in that the layer of lacquer is formed from a lacquer that, with the exception of the additives, has the same chemical composition as the base polymers of the particular bordering layers.

14. A data carrier according to at least one of claims 6 to 13, characterized in that the layer of lacquer is a dispersion lacquer.

15. A data carrier according to at least one of claims 6 to 13, characterized in that the layer of lacquer is a coating powder.

16. A data carrier according to at least one of claims 6 to 12, characterized in that the layer of lacquer comprises a mixture of two different lacquers.

17. A data carrier according to claim 16, characterized in that one of the two lacquers, with the exception of the additives, has the same chemical composition as the base polymer of the particular bordering layers.

18. A data carrier according to claim 6, characterized in that the vehicle is PVC with a K value of greater than 50.

19. A data carrier according to claim 6, characterized in that the layer of lacquer (18) is located above a porous layer (41).

20. A data carrier according to any of claims 1 to 5, characterized in that the thin, nonself-supporting layer is part of a coextruded film (26, 26').

21. A data carrier according to claim 20, characterized in that the nonself-supporting layer (7, 18) borders directly on the layer with the general printed data (2, 22).

22. A data carrier according to claim 20, characterized in that the coextruded film (26) comprises the nonself-supporting layer (27) and two further transparent layers (28, 29), the nonself-supporting layer being located between said transparent layers.

23. A data carrier according to any of claims 20 to 22, characterized in that the nonself-supporting layer comprises several individual layers (30, 31, 32) provided with different, or different amounts of, additives.

24. A data carrier according to claim 23, characterized in that the individual nonself-supporting layers (34, 36) are separated by transparent layers (37) in each case.

25. A data carrier according to at least one of claims 20 to 24, characterized in that the printed data are applied to the surface of the thin, nonself-supporting layer.

26. A data carrier according to claim 25, characterized in that the printed data are transparent for the laser beam.

## Revendications

1. Support de données (1) multicouche portant des données imprimées générales (2, 22), avec au moins une couche opaque (5, 13, 15, 19, 25) et au moins une couche transparente (7, 11, 12, 16, 18, 27, 39), qui est sensibilisé du fait qu'il comprend des additifs, qui sont absorbants pour un rayon laser, et dans lequel, dans la couche transparente, on puisse mettre des informations sous forme de variations locales des propriétés optiques de la couche par coloration de la couche au moyen d'un rayon laser, la couche inscriptible au rayon laser étant une couche mince par rapport aux autres couches du support de données, non autoporteuse et d'une épaisseur de 1 à 50 µm.

2. Support de données selon la revendication 1, caractérisé en ce que la couche non autoporteuse (7, 18, 27, 39) se trouve à l'intérieur de support de données.

3. Support de données selon la revendication 2, caractérisé en ce que la couche non autoporteuse est recouverte d'une couche transparente (4, 9, 10, 20, 28, 40).

4. Support de données selon la revendication 3, caractérisé en ce que la couche transparente est imprimée du côté appliqué sur la couche non autoporteuse.

5. Support de données selon l'une au moins des revendications 1 à 3, caractérisé en ce que les données imprimées (2, 22) sont appliquées sur la couche opaque (5, 15, 19).

6. Support de données selon l'une quelconque des revendications 1 à 5, caractérisé en ce que la couche non autoporteuse est une couche de laque (7, 11, 12, 16, 18).

7. Support de données selon la revendication 6, caractérisé en ce que le liant de la couche de laque est une substance polymère présentant une masse moléculaire supérieure à 10 000 g/mol.

8. Support de données selon la revendication 6, caractérisé en ce que le liant de la couche de laque consiste en un matériau homopolymère.

9. Support de données selon la revendication 6, caractérisé en ce que le liant de la couche de laque consiste en un copolymère dont les comonomères ne manifestent aucun effet plastifiant dans le produit.

10. Support de données selon l'une au moins des revendications 6 à 9, caractérisé en ce que la couche de laque (7, 16, 18) n'est appliquée que dans des zones partielles.

11. Support de données selon la revendication 6, caractérisé en ce que la constitution des couches du support de données présente plusieurs couches de laque superposées dont chacune des couches de laque individuelles (30, 31, 32, 34, 36) contient soit des additifs différents, soit des quantités différentes d'un additif.

12. Support de données selon la revendication 11, caractérisé en ce que les couches de laque superposées (11, 12, 34, 36) sont chacune séparées par au moins une couche transparente (10, 37).

13. Support de données selon l'une au moins des revendications 6 à 12, caractérisé en ce que la couche de laque est formée d'une laque qui est, à l'exception des additifs, présente la même composition chimique que le polymère de base de chacune des couches limitrophes.

14. Support de données selon l'une au moins des revendications 6 à 13, caractérisé en ce que la couche de laque est une laque de dispersion.

15. Support de données selon l'une quelconque des revendications 6 à 13, caractérisé en ce que la couche de laque est une laque pulvérulente.

16. Support de données selon l'une quelconque des revendications 6 à 12, caractérisé en ce que la couche de laque consiste en un mélange de deux laques différentes.

17. Support de données selon la revendication 16, caractérisé en ce que l'une des deux laques présente la même composition chimique, à l'exception des additifs, que le polymère de base de chacune des couches limitrophes.

18. Support de données selon la revendication 6, caractérisé en ce que le liant PVC a une valeur de K supérieure à 50.

19. Support de données selon la revendication 6, caractérisé en ce que la couche de laque (18) se trouve sur une couche poreuse (41).

20. Support de données selon l'une quelconque des revendications 1 à 5, caractérisé en ce que la couche non autoporteuse mince est partie d'une feuille coextrudée (26, 26').

21. Support de données selon la revendication 20, caractérisé en ce que la couche non autoporteuse (7, 18) est immédiatement contiguë à la couche portant les données imprimées générales (2, 22).

22. Support de données selon la revendication 20, caractérisé en ce que la feuille coextrudée (26) consiste en la couche non autoporteuse (27) et de deux autres couches transparentes (28, 29), la couche non autoporteuse étant disposée entre ces couches transparentes.

23. Support de données selon l'une quelconque des revendications 20 à 22, caractérisé en ce que la couche non autoporteuse consiste en plusieurs couches individuelles (31, 32) renfermant des additifs différents ou des additifs en quantités différentes.

24. Support de données selon la revendication 23, caractérisé en ce que chacune des couches individuelles non autoporteuses (34, 36) sont séparées par des couches transparentes (37).

25. Support de données selon l'une quelconque des revendications 20 à 24, caractérisé en ce que les données imprimées sont appliquées sur la surface de la couche mince non autoporteuse.

26. Support de données selon la revendication 25, caractérisé en ce que les données imprimées sont transparentes vis-à-vis des rayons laser.
